# EUROPEAN PATENT SPECIFICATION

(11) **EP 3 060 761 B1**
(45) Date of publication and mention of the grant of the patent: **22.08.2018**
(21) Application number: 14856429.7
(22) Date of filing: 24.09.2014
(51) Int. Cl.: F01D 5/18, F01D 25/12, F02C 7/18, B22C 9/10

(54) **TURBINE AIRFOIL COOLING CORE EXIT**
KÜHLUNGSKERNAUSGANG FÜR EINE TURBINENSCHAUFEL
SORTIE DE NOYAU DE REFROIDISSEMENT DE SURFACE PORTANTE DE TURBINE

(30) Priority: 23.10.2013 US 201361894496 P
(43) Date of publication of application: 31.08.2016
(73) Proprietor: United Technologies Corporation, Farmington, CT 06032 (US)
(72) Inventor: QUACH, San, East Hartford, Connecticut 06108 (US); SLAVENS, Thomas N., Moodus CT 06469 (US)
(74) Representative: Dehns
(86) International application number: PCT/US2014/057145
(87) International publication number: WO 2015/060973

(56) References cited:
- EP-A1- 0 330 601
- EP-A2- 1 445 424
- EP-A2- 1 813 775
- WO-A1-03/042503
- US-A- 5 690 473
- US-A- 6 099 251
- US-A1- 2002 141 870
- US-A1- 2004 197 191
- US-A1- 2005 265 838
- US-A1- 2007 177 975
- US-A1- 2011 236 221
- US-B1- 6 241 467
- US-B1- 8 366 395

## Description

### BACKGROUND OF THE INVENTION

This application relates to cooling a tip of a gas turbine engine airfoil.

Gas turbine engines are known and, typically, include a fan delivering air into a compressor section. The air is compressed and delivered into a combustor section. In the combustor section, fuel is mixed with the compressed air and ignited. Products of this combustion pass downstream over turbine rotors driving them to rotate.

The turbine rotors include rotating blades and static vanes, all of which are exposed to the hot products of combustion. As such, it is known to provide cooling air passages within the airfoils. One known cooling scheme directs cooling air through a plurality of channels on a suction side of the airfoil, and extending toward a radially tip. The plurality of channels merge into a plenum at the tip. Air from this plenum then passes toward a pressure side of the airfoil and leaves through cooling holes at the tip and adjacent the pressure side. The air in the plenum loses velocity and, thus, the cooling is not as efficient as may be desired.

EP 0330601 A1 discloses a prior art gas turbine engine component as set forth in the preamble of claim 1.

### SUMMARY OF THE INVENTION

In one aspect, a gas turbine engine component has an airfoil extending from a platform to a tip at an end of the airfoil spaced from the platform. The airfoil has a suction wall and a pressure wall, with at least one channel extending toward the tip from the platform. A plenum communicates with the at least one channel. The plenum flows from the suction wall toward the pressure wall at the tip to communicate with cooling holes near the pressure wall. The plenum has a reduced cross-sectional area between the suction wall and the pressure wall, and an increase in cross-sectional area downstream of the reduced cross-sectional area.

In an embodiment, the plenum has a first enlarged cross-sectional area portion, the reduced cross-sectional area portion, and then a second enlarged cross-sectional area flow portion.

In another embodiment according to any of the previous embodiments, a plurality of cavities form the reduced cross-sectional area.

In another embodiment according to any of the previous embodiments, the first enlarged cross-sectional area portion is formed by a single plenum that communicates cooling air downstream to the plurality of cavities. The second enlarged cross-sectional area portion is formed by a single plenum that receives cooling air from the plurality of cavities.

In another embodiment according to any of the previous embodiments, the at least one channel is a plurality of suction wall channels.

In another embodiment according to any of the previous embodiments, the at least one channel is a serpentine channel that extends between the suction and pressure walls, and communicates with the plenum adjacent the suction wall.

In another embodiment according to any of the previous embodiments, the cooling holes are formed in an outer tip face of the airfoil.

In another embodiment according to any of the previous embodiments, the component is a turbine blade.

There is further provided a gas turbine engine as set forth in claim 9.

In another aspect, a mold core for use in forming cooling passages within a gas turbine component has at least one finger merging into a single solid portion. A plurality of ribs connect the first single solid portion to a second single solid portion.

In an embodiment, the at least one finger is a plurality of fingers spaced from each other.

These and other features may be best understood from the following drawings and specification.

### BRIEF DESCRIPTION OF THE DRAWINGS

Figure 1 schematically shows a gas turbine engine.
Figure 2A shows an example turbine component.
Figure 2B shows a top view of the Figure 2A component.
Figure 2C is a cross-sectional view along line C-C of Figure 2A.
Figure 2D shows a prior art cooling scheme.
Figure 2E shows a mold core for forming the Figure 2D cooling scheme.
Figure 3 shows a novel cooling scheme.
Figure 4 shows a core component for forming the Figure 3 cooling scheme.
Figure 5 schematically shows a mold.
Figure 6A shows a second embodiment.
Figure 6B is a view along line B-B of Figure 6A.

### DETAILED DESCRIPTION

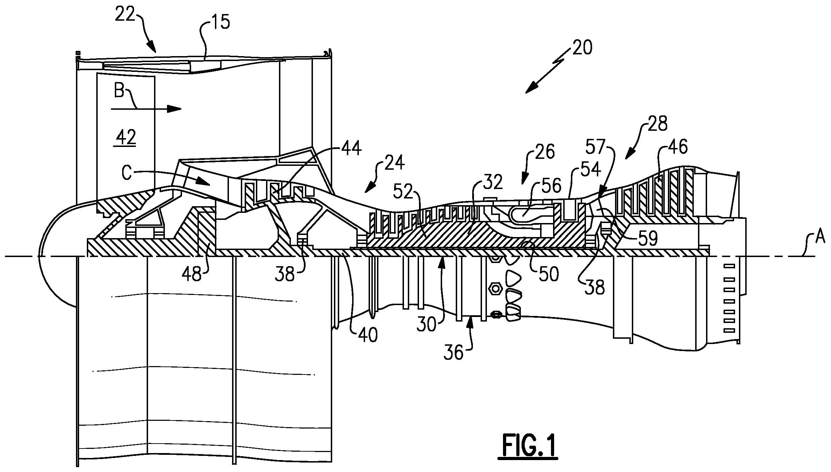

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s).

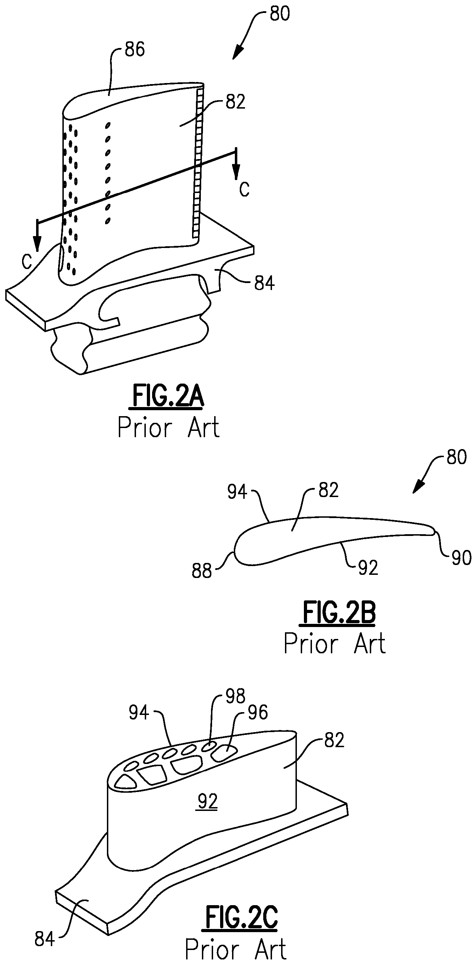

Figure 2A shows a sample turbine component, which is illustrated as a blade 80. While a blade 80 is illustrated, it should be understood the teachings of this disclosure extend to other components having an airfoil, such as vanes. An airfoil 82 extends radially outwardly from a platform 84. An outer tip face 86 is spaced from the platform at a radial end. If used as a blade, this will be the radially outer end. If used as a vane, this will be the radially inner end.

Figure 2B shows the airfoil 82 extending from a trailing edge 90 to a leading edge 88.

There is also a suction wall 94 and a pressure wall 92.

Figure 2C is a cross-sectional view along line C-C as shown in Figure 2A. As shown, there are main body cooling air channels 96 which receive cooling air, such as from a source radially beyond the platform 84 and pass cooling air toward the outer tip 86. There are also suction sides skin channels 98 formed adjacent the suction wall 94.

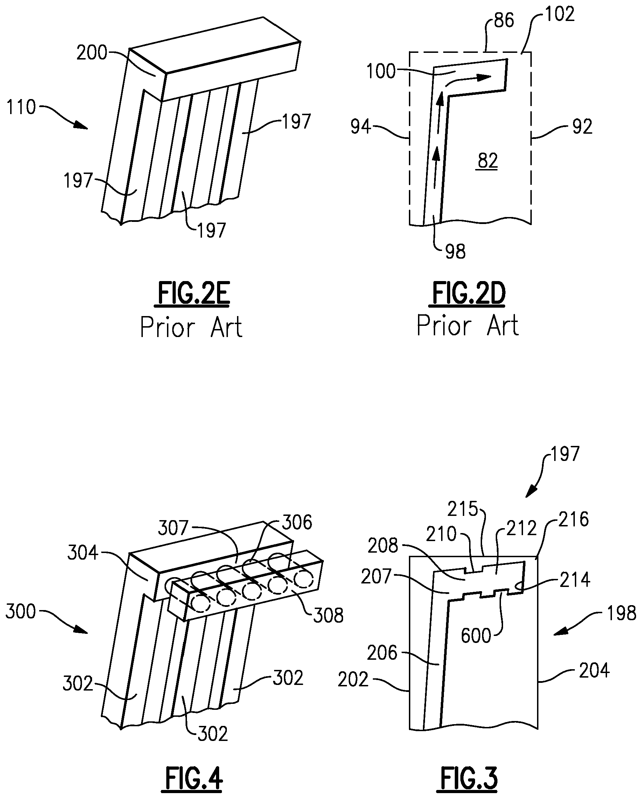

As shown in Figure 2D, the skin channels 98 extend radially from the platform 84 toward the tip 86, then merge into a single plenum 100. Air from the plenum 100 then leads to a plurality of cooling holes 102 in the outer tip face 86 and adjacent the pressure wall 92.

As known, the cooling channels within an airfoil may be formed by a mold core in a lost core molding process. A mold core 110 for forming the cooling scheme as shown in Figure 2D is illustrated in Figure 2E. A plurality of mold core fingers 197 extend to a plenum core portion 200. As known, the mold core 110 is placed in a mold and surrounded by molten metal. That metal then solidifies. The mold core 110 may then be leached leaving the cavity such as shown in Figure 2D within the airfoil 82.

As mentioned, the cooling air in the enlarged plenum 100 may lose velocity and does not cool as efficiently as may be desired. Figure 3 shows a novel airfoil 198. Airfoil 198 has a suction wall 202 with a plurality of suction wall channels 206. A pressure wall 204 has cooling holes 216 on an outer tip face 215. The suction wall channels 206 merge into a first plenum 207. There is an end wall 208 of the first plenum portion 207 and then necked or reduced cross-sectional area portion 210. Downstream of the reduced area portion 210, a second plenum portion 212 expands outwardly to an end wall 214. While the reduced area portion is formed of a plurality of areas or cavities 210, it could be a single channel.

Now, the cooling air will flow radially outwardly through the suction wall channels 206. The cooling air from the plurality of suction wall channels 206 will merge together in the first plenum portion 207, then be reduced down to the necked portion 210 and expand back into the second plenum portion 212. The plenum has a reduced cross-sectional area between the suction wall and the pressure wall, and an increase in cross-sectional area downstream of the reduced cross-sectional area. At that point, the cooling air may hit the wall 214. This then provides additional cooling at or adjacent to the pressure wall 204 before the air leaves through the cooling holes 216.

Further, the area reduction ensures that the air will continue to have adequate and high speeds to provide increased convection cooling adjacent the tip.

In one embodiment, a ratio of a cooling air flow area in the first plenum portion 207, at a location immediately before the necked or reduced area portion 210, compared to an area of the reduced area portion 210 immediately before the end of the reduced area portion is between 7/8 and 3/4.

Of course, other ratios would come within the scope of this disclosure.

Figure 4 shows a mold core 300 for forming the cooling scheme of Figure 3. As shown, a plurality of fingers 302 will form the suction wall channels 206. Those fingers all merge into an enlarged plenum portion 304. The plenum portions then merge into a plurality of ribs 306. Intermediate the ribs 306 are spaces 307. A worker of ordinary skill in this art would recognize that when molding of an airfoil occurs around the mold core 300, the ribs 306 will result in cavities such as the reduced flow cross-sectional areas 210, while the spaces 307 will result in solid material intermediate the areas 210. That solid material will form ribs. The ribs provide additional rigidity at the tip of the airfoil 198.

A second plenum portion 308 is connected to each of the ribs 306 and will form the second plenum portion 212. It should be understood that the second plenum portion 308 may actually be a plurality of portions.

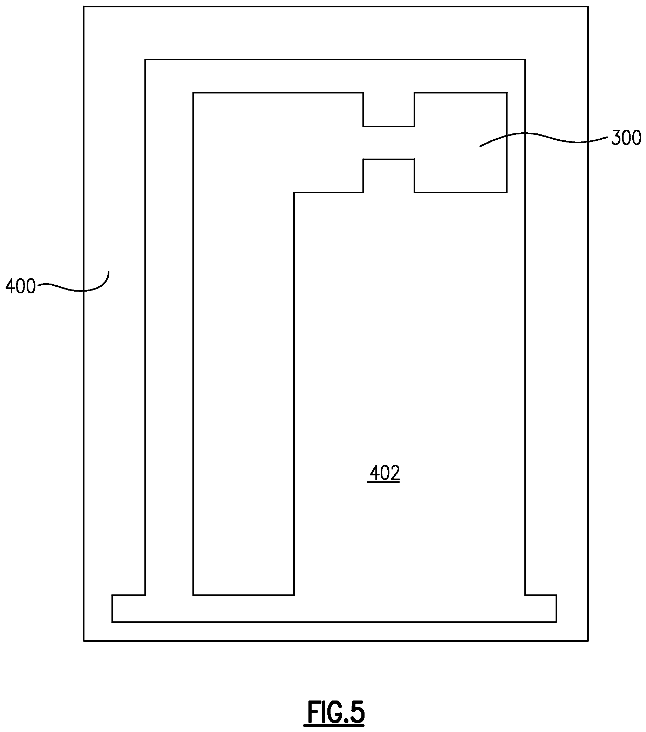

Figure 5 schematically shows a mold 400. As known, a space 402 surrounds the mold core 300. The space 402 receives molten metal and the metal is allowed to solidify. After the metal has solidified, the mold core 300 is leached away leaving the cavity such as shown in Figure 3.

A mold core such as shown in Figure 4 would preferably be formed by an additive or layer manufacturing process. One desired process would be direct metal laser centering.

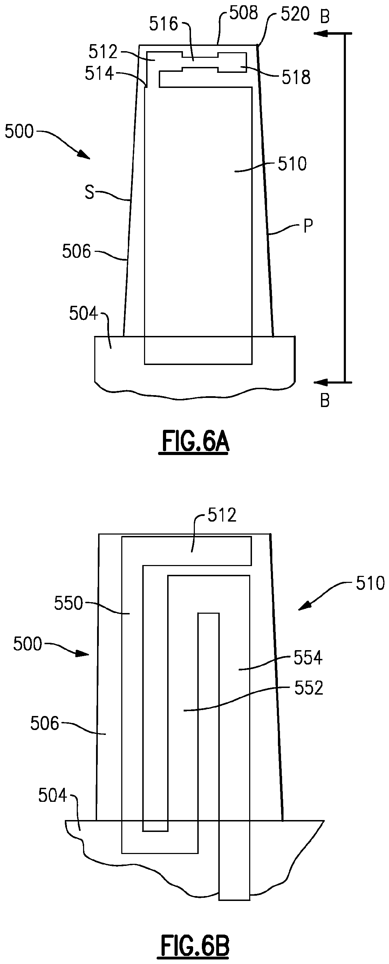

Another embodiment 500 is illustrated in Figure 6A and 6B. Rather than having the suction wall channels supplying the plenum, a serpentine feed channel 510 extends between the suction wall S and pressure wall P. The airfoil 506 is in large part cooled by this serpentine feed passage. As shown, the serpentine feed channel 510 communicates at 514 to the plenum 512, and adjacent the suction wall S. There is again a reduced flow cross-sectional area 516, which may be a plurality of areas formed by the ribs. A second plenum portion 518 communicates with outlet holes 520.

As shown in Figure 6B, the serpentine feed channel 510 may include a plurality of legs 550, 552, and 554 moving cooling fluid in a serpentine path through the airfoil 506.

The embodiment of Figure 6A and 6B may be formed by an appropriate mold core, and molded by a method similar to that described with regard to Figure 5.

To further enhance heat transfer, augmentation features such as tip-strips, pedestals, dimples and radial fins may be provided. In particular, such structure may be included in the second plenum portion 212, as shown schematically at 600 in Figure 3.

## Claims

1. A gas turbine engine component comprising an airfoil (198;506) extending from a platform to a tip at an end of said airfoil spaced from said platform, said airfoil having a suction wall (202;S) and a pressure wall (204;P), with at least one channel (206;510) extending toward said tip from said platform, a plenum communicating with said at least one channel (206;510), and said plenum flowing from said suction wall (202;S) toward said pressure wall (204;P) at said tip to communicate with cooling holes (216;520) near said pressure wall (204;P);
**characterised in that**:
said plenum has a reduced cross-sectional area (210;516) between said suction wall (202;S) and said pressure wall (204;P), and an increase in cross-sectional area downstream of said reduced cross-sectional area (210;516).

2. The gas turbine engine component as set forth in claim 1, wherein said plenum having a first enlarged cross-sectional area portion (207;512), said reduced cross-sectional area portion (210;516), and then a second enlarged cross-sectional area flow portion (212;518).

3. The gas turbine engine component as set forth in claim 1 or 2, wherein a plurality of cavities form said reduced cross-sectional area (210;516).

4. The gas turbine engine component as set forth in claim 3, wherein said first enlarged cross-sectional area portion (207;512) is formed by a single plenum communicating cooling air downstream to said plurality of cavities and said second enlarged cross-sectional area portion (212;518) is formed by a single plenum receiving cooling air from said plurality of cavities.

5. The gas turbine engine component as set forth in any preceding claim, wherein said at least one channel (206;510) is a plurality of suction wall channels (206).

6. The gas turbine engine component as set forth in any of claims 1-4, wherein said at least one channel (206;510) is a serpentine channel (510) extending between said suction and pressure walls (202,204;S,P), and communicating with said plenum adjacent said suction wall (202;S).

7. The gas turbine engine component as set forth in any preceding claim, wherein said cooling holes (216;520) are formed in an outer tip face of said airfoil (198;506).

8. The gas turbine engine component as set forth in any preceding claim, wherein said component is a turbine blade.

9. A gas turbine engine (20) comprising:
a compressor section (24) and a turbine section (28), with said compressor and turbine sections (24,28) including rotating blades and static vanes, with at least one of said rotating blades and static vanes comprising a gas turbine engine component of any preceding claim.

10. A mold core (300) for use in forming cooling passages (206) within a gas turbine component comprising:
at least one finger (302) merging into a first single solid portion (304); and
a plurality of ribs (306) connecting said first single solid portion (304) to a second single solid portion (308).

11. The mold core (300) as set forth in claim 10, wherein said at least one finger (302) is a plurality of fingers (302) spaced from each other.

## Patentansprüche

1. Gasturbinentriebwerksbauteil, umfassend eine Schaufel (198;506), die sich von einer Plattform zu einer Spitze an einem Ende der Schaufel erstreckt, beabstandet von der Plattform, wobei die Schaufel über eine Saugwand (202;S) und eine Druckwand (204;P) mit mindestens einem Kanal (206;510) verfügt, der sich von der Plattform aus zur Spitze erstreckt, eine Luftkammer, die mit dem mindestens einen Kanal (206;510) in Verbindung steht, und wobei die Luftkammer von der Saugwand (202;S) zur Druckwand (204;P) an der Spitze verläuft, um mit Kühllöchern (216;520) nahe der Druckwand (204;P) in Verbindung zu stehen;
**dadurch gekennzeichnet, dass**:
die Luftkammer eine verringerte Querschnittsfläche (210;516) zwischen der Saugwand (202;S) und der Druckwand (204;P) und eine Vergrößerung der Querschnittsfläche stromabwärts der verringerten Querschnittsfläche (210;516) aufweist.

2. Gasturbinentriebwerksbauteil nach Anspruch 1, wobei die Luftkammer einen ersten vergrößerten Querschnittsflächenabschnitt (207;512), den verringerten Querschnittsflächenabschnitt (210;516), und dann einen zweiten vergrößerten Querschnittsflächendurchflussabschnitt (212;518) aufweist.

3. Gasturbinentriebwerksbauteil nach Anspruch 1 oder 2, wobei eine Vielzahl von Hohlräumen die verringerte Querschnittsfläche (210;516) bildet.

4. Gasturbinentriebwerksbauteil nach Anspruch 3, wobei der erste vergrößerte Querschnittsflächenteil (207;512) durch eine einzelne Luftkammer gebildet wird, die Kühlluft stromabwärts zur Vielzahl von Hohlräumen leitet, und der zweite vergrößerte Querschnittsflächenabschnitt (212;518) durch eine einzelne Luftkammer gebildet wird, die Kühlluft von der Vielzahl von Hohlräumen aufnimmt.

5. Gasturbinentriebwerksbauteil nach einem der vorhergehenden Ansprüche, wobei der mindestens eine Kanal (206;510) eine Vielzahl von Saugwandkanälen (206) darstellt.

6. Gasturbinentriebwerksbauteil nach einem der Ansprüche 1-4, wobei der mindestens eine Kanal (206;510) ein Serpentinenkanal (510) ist, der sich zwischen der Saug- und der Druckwand (202,204;S,P) erstreckt und mit der Luftkammer neben der Saugwand (202;S) in Verbindung steht.

7. Gasturbinentriebwerksbauteil nach einem der vorhergehenden Ansprüche, wobei die Kühllöcher (216;520) in einer äußeren Spitzenfläche der Schaufel (198;506) gebildet werden.

8. Gasturbinentriebwerksbauteil nach einem der vorhergehenden Ansprüche, wobei das Bauteil eine Turbinenschaufel ist.

9. Gasturbinentriebwerk (20), umfassend:
einen Verdichterabschnitt (24) und einen Turbinenabschnitt (28), wobei der Verdichter- und der Turbinenabschnitt (24,28) rotierende Schaufeln und statische Schaufeln umfassen, wobei mindestens eine der rotierenden Schaufeln und statischen Schaufeln ein Gasturbinentriebwerksbauteil eines vorhergehenden Anspruchs umfasst.

10. Formkern (300) zur Verwendung bei der Bildung von Kühldurchgängen (206) innerhalb eines Gasturbinentriebwerksbauteil, umfassend:
mindestens einen Finger (302), der in einen ersten einzelnen festen Abschnitt (304) übergeht; und
eine Vielzahl von Rippen (306), die den ersten einzelnen festen Abschnitt (304) mit einem zweiten einzelnen festen Abschnitt (308) verbinden.

11. Formkern (300) nach Anspruch 10, wobei der mindestens eine Finger (302) eine Vielzahl von Fingern (302) bildet, die voneinander beabstandet sind.

## Revendications

1. Composant de moteur à turbine à gaz comprenant une surface portante (198 ; 506) s'étendant depuis une plateforme à un bout à une extrémité de ladite surface portante espacée de ladite plateforme, ladite surface portante présentant une paroi d'aspiration (202 ; S) et une paroi de pression (204 ; P), avec au moins un canal (206 ; 510) s'étendant vers ledit bout depuis ladite plateforme, un plénum communiquant avec ledit au moins un canal (206 ; 510), et ledit plénum passant de ladite paroi d'aspiration (202 ; S) vers ladite paroi de pression (204 ; P) sur ledit bout pour communiquer avec des orifices de refroidissement (216 ; 520) près de ladite paroi de pression (204 ; P) ;
**caractérisé en ce que** :
ledit plénum présente une zone de section transversale réduite (210 ; 516) entre ladite paroi d'aspiration (202 ; S) et ladite paroi de pression (204 ; P), et une augmentation de zone de section transversale en aval de ladite zone de section transversale réduite (210 ; 516).

2. Composant de moteur à turbine à gaz selon la revendication 1, dans lequel ledit plénum présente une première portion de zone de section transversale agrandie (207 ; 512), ladite portion de zone de section transversale réduite (210 ; 516), et ensuite une seconde portion d'écoulement de zone de section transversale agrandie (212 ; 518).

3. Composant de moteur à turbine à gaz selon la revendication 1 ou 2, dans lequel une pluralité de cavités forme ladite zone de section transversale réduite (210 ; 516).

4. Composant de moteur à turbine à gaz selon la revendication 3, dans lequel ladite première portion de zone de section transversale agrandie (207 ; 512) est formée par un seul plénum communiquant de l'air de refroidissement en aval de ladite pluralité de cavités et ladite seconde portion de zone de section transversale agrandie (212 ; 518) est formée par un seul plénum recevant de l'air de refroidissement de ladite pluralité de cavités.

5. Composant de moteur à turbine à gaz selon une quelconque revendication précédente, dans lequel ledit au moins un canal (206 ; 510) est une pluralité de canaux de paroi d'aspiration (206).

6. Composant de moteur à turbine à gaz selon l'une quelconque des revendications 1 à 4, dans lequel ledit au moins un canal (206 ; 510) est un canal en serpentin (510) s'étendant entre lesdites parois d'aspiration et de pression (202, 204 ; S, P), et communiquant avec ledit plénum adjacent à ladite paroi d'aspiration (202 ; S).

7. Composant de moteur à turbine à gaz selon une quelconque revendication précédente, dans lequel lesdits orifices de refroidissement (216 ; 520) sont formés dans une face de bout extérieur de ladite surface portante (198 ; 506).

8. Composant de moteur à turbine à gaz selon une quelconque revendication précédente, dans lequel ledit composant est une pale de turbine.

9. Moteur à turbine à gaz (20) comprenant :
une section de compresseur (24) et une section de turbine (28), lesdites sections de compresseur et de turbine (24, 28) incluant des pales rotatives et des aubes statiques, avec au moins l'une desdites pales rotatives et aubes statiques comprenant un composant de moteur à turbine à gaz selon une quelconque revendication précédente.

10. Noyau de moule (300) pour une utilisation dans la formation de passages de refroidissement (206) dans un composant de turbine à gaz comprenant :
au moins un doigt (302) convergent dans une première portion solide unique (304) ; et
une pluralité de nervures (306) raccordant ladite première portion solide unique (304) à une seconde portion solide unique (308).

11. Noyau de moule (300) selon la revendication 10, dans lequel ledit au moins un doigt (302) est une pluralité de doigts (302) espacés les uns des autres.
